# EUROPÄISCHE PATENTSCHRIFT

(11) **EP 0 427 057 B1**
(45) Veröffentlichungstag und Bekanntmachung des Hinweises auf die Patenterteilung: **22.06.1994**
(21) Anmeldenummer: 90120536.9
(22) Anmeldetag: 26.10.1990
(51) Int. Cl.: F16K 11/078

(54) **Dichtring für sanitäre Wasserventile**
Sanitary faucet sealing ring
Garniture annulaire pour robinets sanitaires

(30) Priorität: 07.11.1989 DE 3936983
(43) Veröffentlichungstag der Anmeldung: 15.05.1991
(73) Patentinhaber: FRIEDRICH GROHE AKTIENGESELLSCHAFT, D-58675 Hemer (DE)
(72) Erfinder: Pawelzik, Manfred, W-4770 Soest (DE); Titze, Horst, W-5800 Hagen (DE)

(56) Entgegenhaltungen:
- DE-A- 3 244 120
- DE-A- 3 318 888
- DE-B- 1 214 495
- DE-B- 2 118 781

## Beschreibung

Die Erfindung bezieht sich auf einen Dichtring für sanitäre Wasserventile mit zwei parallel angeordneten Dichtlippen, so daß jeweils eine der Dichtlippen stirnseitig an einer Ventilscheibe und an einem Ventilteil anliegt, wobei die Dichtlippen vom Wasserdruck in ihrer Dichtposition unterstützt sind.
Eine derartige Dichtung ist aus der DE-A-32 44 120 bekannt. Der Einsatz dieser Doppellippendichtung kann problematisch sein, wenn sie zur Abdichtung zweier aufeinanderliegender Bauteile eingesetzt wird und in dem einen Bauteil eine Aufnahmeringnut vorgesehen ist, wie es bei einem in der DE-A-33 18 888 offenbarten Mischventil zwischen einer Abdeckhaube (3) und einer Steuerscheibe (2) vorgesehen ist. Hierbei kann es zu unerwünschten Einklemmungen einer Dichtlippe im Spalt zwischen der Steuerscheibe und der Abdeckhaube kommen.
Ferner ist aus der DE-B-21 18 781 ein Dichtungsring für eine Rohrverbindung zur Abdichtung an den zylindrischen Mantelflächen bekannt, bei dem ein starkwandiger Mittelteil zur drehfesten Anordnung vorgesehen ist.

Der Erfindung liegt die Aufgabe zugrunde, die im Oberbegriff des Anspruchs 1 angegebene Dichtung zu verbessern und so auszubilden, daß ein Verklemmen der Dichtlippen ausgeschlossen wird.
Diese Aufgabe wird erfindungsgemäß dadurch gelöst, daß an der inneren, vom Wasser beaufschlagten Mantelfläche zwischen den beiden Dichtlippen ein radial vorstehender Bund ausgebildet ist, mit dem der Dichtring in der Aufnahmenut geführt ist.
Weitere Ausgestaltungen der Erfindung sind in den Ansprüchen 2 bis 5 angegeben.

Ein Ausführungsbeispiel der Erfindung ist in der Zeichnung dargestellt und wird im folgenden näher erläutert. Es zeigt
- Figur 1: ein in Sanitärarmaturenkörper als Baueinheit einsetzbares Misch- und Mengenregulierventil im Längsschnitt;
- Figur 2: das Misch- und Mengenregulierventil gemäß Figur 1 um 90° gedreht;
- Figur 3: einen in Figur 1 gezeigten Dichtring im Seitenschnitt;
- Figur 4: den Dichtring gemäß Figur 3 in Draufsicht;
- Figur 5: einen Profilschnitt des Dichtrings gemäß Figur 3 in vergrößerter Darstellung;
- Figur 6: einen Teil A des in Figur 2 gezeigten Misch- und Mengenregulierventils;
- Figur 7: den Ausschnitt A gemäß Figur 6 mit einem vergrößerten Spalt zwischen den zu verbindenden Teilen.

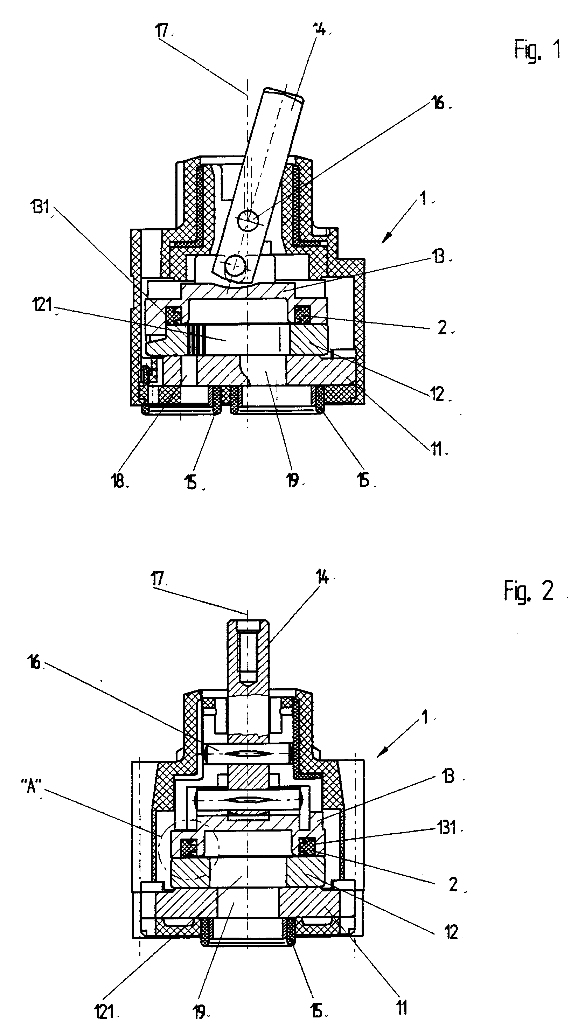

Das in den Figuren 1 und 2 dargestellte Mischventil 1 entspricht weitgehend dem in der Druckschrift DE 33 18 888 Al. Das Mischventil 1 ist als Baueinheit ausgebildet, welches in Sanitärarmaturen einsetzbar ist. Hierbei wird es von einem Befestigungsmittel mit einer Stirnseite gegen einen Bodenbereich der Armatur gepreßt, wobei Dichtringe 15 einerseits einen dichten Anschluß an die Zu- und Abführungskanäle in der Armatur herstellen und andererseits eine Ventilsitzscheibe 11, eine Ventilregulierscheibe 12 und eine Abdeckhaube 13 zu einem Block mit einer vorgegebenen Vorspannung zusammenpressen. Die Ventilsitzscheibe 11 und die Ventilregulierscheibe 12 sind aus hartem Keramikmaterial und liegen mit feinstbearbeiteten Stirnflächen wasserdicht aneinander. Die Ventilregulierscheibe 12 weist dabei einen Überströmkanal 121 auf, der als Durchbruch ausgebildet ist und von der gegenüberliegenden Seite von der Abdeckhaube 13 mit einer Dichtung (Dichtring 2) verschlossen ist. An der Abdeckhaube 3 ist andererseits ein Stellhebel 14 angelenkt, der in zwei Freiheitsgraden, nämlich um eine horizontale Achse 16 schwenkbar und um eine Mittelachse 17 drehbar bewegt werden kann. Mit Hilfe der beiden Freiheitsgrade kann somit die Ventilregulierscheibe 12 mit ihrem Überströmkanal 121 mit den Zuströmöffnungen 18 für Kalt- und Warmwasser und der Auslaßöffnung 19 wahlweise in Überdeckung gebracht werden, so daß in Abhängigkeit von der Drehstellung um die Mittelachse 17 das Mischungsverhältnis und in Abhängigkeit von der Schwenkstellung um die Achse 16 die Gesamtdurchflußmenge des Wassers einstellbar ist.

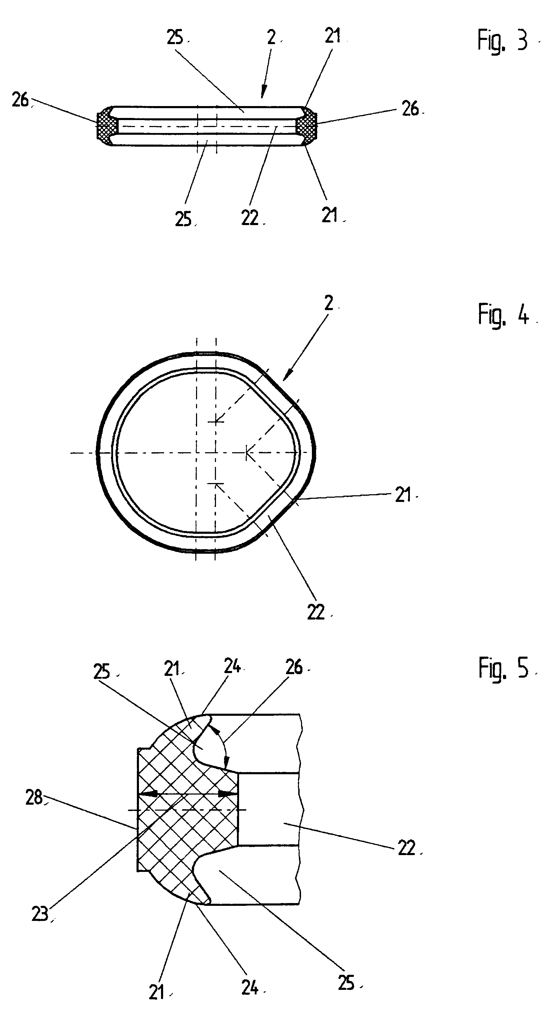

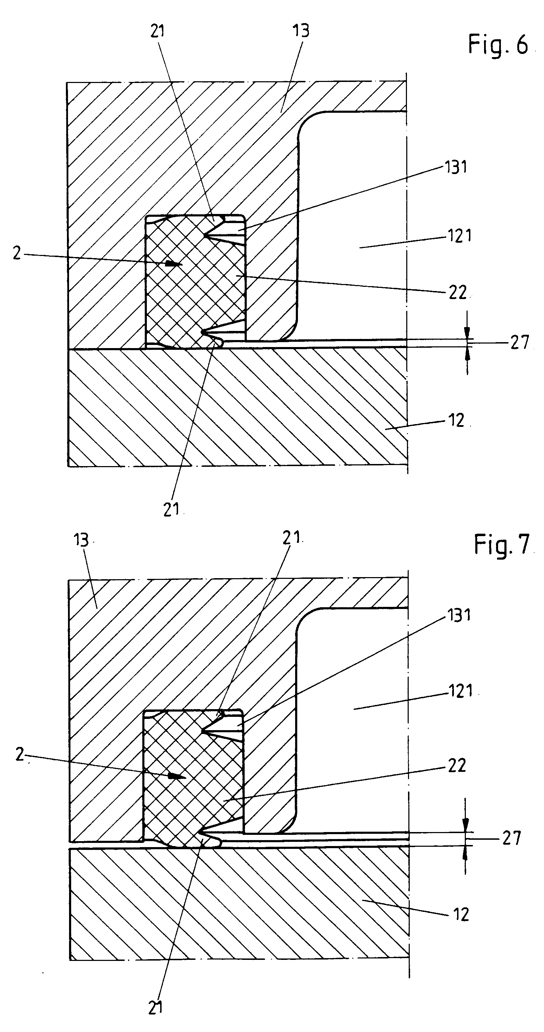

Um eine sichere Abdichtung zwischen der Abdeckhaube 13 und der Ventilregulierscheibe 12 zu erreichen, ist die in den Figuren 3 bis 5 besonders dargestellte Dichtung 2 in einer Aufnahmenut 131 angeordnet. An beiden Stirnseiten der Dichtung ist jeweils eine Dichtlippe 21 ausgebildet, die von einer V-förmigen Nut 25 von einem in dem vom Wasser beaufschlagten Raum vorkragenden Bund 22 abgegrenzt ist. Im entspannten Zustand weist die V-förmige Nut 25 jeweils einen Öffnungswinkel 26 von etwa 70° auf. Zur guten Anpaßbarkeit und Anlage sind die Dichtlippen 21 an der Außenstirnseite 24 gewölbt ausgebildet. Die Dichtlippen 21 sind an dem Dichtring 2 so angeordnet, daß der Bund 22 etwa ein Viertel der Gesamtdicke 23 des Dichtungsquerschnitts vorsteht. Durch diese Ausbildung wird erreicht, daß der Dichtring 2 in den Seitenwandungen der Aufnahmenut 131 einerseits mit dem Bund 22 und andererseits mit seinem Außenmantel 28 sicher geführt ist und außerdem gewährleistet ist, daß die Dichtlippen 21 ohne Verklemmung sich entsprechend bewegen können. Dieses wird besonders deutlich aus den in Figur 6 und 7 dargestellten unterschiedlichen Zusammenpressungen.
In Figur 6 ist die Ventilregulierscheibe 12 auf Block mit der Abdeckhaube 13 zusammengepreßt. Hierbei stehen die Dichtlippen 21 über einen Spalt 27 mit dem Wasserraum bzw. dem Überströmkanal 121 in Verbindung.
In Figur 7 ist ein vergrößerter Spalt 27 dargestellt, wobei ersichtlich ist, daß auch in dieser Stellung eine sichere Lage der Dichtung 2 in der Aufnahmenut 131 gegeben und eine sichere Abdichtung durch die Dichtlippen 21 gewährleistet wird. Ein Verklemmen der Dichtlippen 21 kann nicht auftreten. Als günstigen Werkstoff für den Dichtring 2 kann ein Elastomer mit einer Shore-Härte von etwa A 50 eingesetzt werden. Hierbei sollte die Gesamtdicke 23 des Dichtungsquerschnitts etwa 2,6 mm betragen. Zum Druckausgleich zwischen den beiden V-förmigen Nuten 25 können eine oder mehrere Ausnehmungen im Bund 22 vorgesehen sein.

## Patentansprüche

1. Dichtring für sanitäre Wasserventile mit zwei parallel angeordneten Dichtlippen (21), so daß jeweils eine der Dichtlippen (21) stirnseitig an einer Ventilscheibe (12) und einem Ventilteil (13) anliegt, wobei die Dichtlippen (21) vom Wasserdruck in ihrer Dichtposition unterstützt sind, dadurch gekennzeichnet, daß an der inneren, vom Wasser beaufschlagten Mantelfläche des Dichtringes zwischen den beiden Dichtlippen (21) ein radial vorstehender Bund (22) ausgebildet ist, mit dem der Dichtring (2) in einer Aufnahmenut (131) geführt ist.

2. Dichtring nach Anspruch 1, dadurch gekennzeichnet, daß der Bund (22) bei entspannten Dichtlippen (21) etwa ein Viertel der Gesamtdicke (23) des Dichtungsquerschnitts vorsteht.

3. Dichtring nach Anspruch 1 oder 2, dadurch gekennzeichnet, daß die Dichtlippen (21) zur Stirnseite (24) gewölbt ausgebildet sind und im entspannten Zustand zum Bund (22) mit jeweils einer umlaufenden, einen Öffnungswinkel (26) von etwa 70° aufweisenden, V-förmigen Nut (25) abgesetzt sind.

4. Dichtring nach einem der Ansprüche 1 bis 3, dadurch gekennzeichnet, daß als Werkstoff ein Elastomer mit einer Shore-Härte von etwa A 50 eingesetzt ist.

5. Dichtring nach einem der Ansprüche 3 bis 4, dadurch gekennzeichnet, daß die V-förmigen Nuten (25) zum Druckausgleich über eine oder mehrere Ausnehmungen im Bund (22) miteinander verbunden sind.

## Claims

1. Sealing ring for sanitary water valves with two parallel sealing lips (21), so that each of the sealing lips (21) bears at a respective end against a valve disc (12) or a valve part (13), the sealing lips (21) being supported in their sealing position by the water pressure, characterised in that on the inner wall surface, subjected to the water, of the sealing ring, between the two sealing lips (21), a radially projecting collar (22) is formed with which the sealing ring (2) is guided in a receiving groove (131).

2. Sealing ring according to Claim 1, characterised in that the collar (22), when the sealing lips (21) are unstressed, protrudes approximately a quarter of the total thickness (23) of the sealing cross-section.

3. Sealing ring according to Claim 1 or 2, characterised in that the sealing lips (21) are curved with respect to the end face (24) and in the unstressed state are off-set with respect to the collar (22), in each case with a circumferential V-shaped groove (25) having an opening angle (26) of approximately 70°.

4. Sealing ring according to one of Claims 1 to 3, characterised in that an elastomer having a Shore hardness of approximately A 50 is used as the material.

5. Sealing ring according to one of Claims 3 to 4, characterised in that the V-shaped grooves (25) are connected to one another, for pressure equalisation, by way of one or more recesses in the collar (22).

## Revendications

1. Rondelle d'étanchéité pour des soupapes itaires comportant deux lèvres d'étanchéité (21), parallèles de façon que chaque fois l'une des lèvres d'étanchéité (21) est appliquée frontalement contre un disque de soupape (12) et une partie de soupape (13), les lèvres d'étanchéité (21) étant soutenues dans leur position d'étanchéité par la pression de l'eau, caractérisée en ce que la surface enveloppe (B) de la rondelle d'étanchéité, intérieure, soumise à l'action de l'eau, comporte entre les deux lèvres d'étanchéité (21) un collet (22) radialement en saillie qui guide la rondelle d'étanchéité (22) dans une rainure de réception (131).

2. Rondelle d'étanchéité selon la revendication 1, caractérisée en ce que lorsque les lèvres d'étanchéité (21) sont détendues, le collet (22) est en saillie environ d'un quart de l'épaisseur totale (23) de la section de la rondelle d'étanchéité.

3. Rondelle d'étanchéité selon la revendication 1 ou 2, caractérisée en ce que les lèvres d'étanchéité (21) sont bombés en direction de la face frontale (24) et à l'état détendu, elles sont séparées du collet (22) par une rainure (25) en forme de V, respective, périphérique, ayant un angle d'ouverture (26) environ de 70°.

4. Rondelle d'étanchéité selon les revendications 1 à 3, caractérisée en ce que le matériau est un élastomère ayant une dureté Shore A 50.

5. Rondelle d'étanchéité selon l'une des revendications 3 à 4, caractérisée en ce que les rainures en forme de V (25) sont reliées par une ou plusieurs cavités dans la collerette (22) pour équilibrer la pression.
